# EUROPÄISCHE PATENTANMELDUNG

(11) **EP 1 938 720 A1**
(43) Veröffentlichungstag der Anmeldung: **02.07.2008**
(21) Anmeldenummer: 06127384.3
(22) Anmeldetag: 29.12.2006
(51) Int. Cl.: A47J 31/54

(54) **Kaffeemaschine**

(71) Anmelder: Petervin S.A., L-1233 Luxembourg (LU)
(72) Erfinder: Illy, Francesco, 7516 Maloja (CH)
(74) Vertreter: Liebetanz, Michael

(57) **Zusammenfassung**

Eine Kaffeemaschine verfügt über einen Wasser aufnehmenden Behälter (1), eine Aufheizeinrichtung (5), wobei diese mit dem Behälter (1) zum Transport von aufzuheizendem Wasser verbunden (2) ist, insbesondere durch eine dazwischen angeordnete Pumpe (3), und eine Brühkammer (7), die mit der Aufheizeinrichtung (5) zum Transport des aufgeheizten Wassers verbunden ist und über einen Auslass (8) zur Abgabe des hergestellten Kaffees verfügt. Dabei ist ein Temperatur-Sensor (10) vorgesehen, mit dem die Temperatur des in die Brühkammer (7) tretende Wasser erfassbar ist. Dieser Temperatur-Sensor (10) ist mit einer Steuereinrichtung (11), insbesondere einer elektronischen Steuereinrichtung (11), verbunden, mit der die besagte Temperatur einstellende Elemente (5) regelbar sind, so dass das in die Brühkammer (7) tretende Wasser eine voreinstellbare Temperatur zwischen 50°C und 75°C aufweist, vorteilhafterweise zwischen 65°C und 75°C und insbesondere zwischen 70°C und 74°C.

## Beschreibung

Die Erfindung betrifft eine Kaffeemaschine mit einem Wasser aufnehmenden Behälter, mit einer Aufheizeinrichtung, wobei diese mit dem Behälter zum Transport von aufzuheizendem Wasser verbunden ist, insbesondere durch eine dazwischen angeordnete Pumpe, und mit einer Brühkammer, die mit der Aufheizeinrichtung zum Transport des aufgeheizten Wassers verbunden ist und über einen Auslass zur Abgabe des hergestellten Kaffees verfügt, mit den Merkmalen des Oberbegriffs des Anspruchs 1.

### Stand der Technik

Eine solche Kaffeemaschine ist aus dem Stand der Technik bekannt. Die DE 35 42 507 beschreibt einen Durchlauf-Erhitzer für eine Kaffeemaschine. Dabei wird darauf hingewiesen, dass eine möglichst hohe Brühtemperatur angestrebt wird. Diese Druckschrift stellt ferner fest, dass elektrische Durchlauferhitzer mit dünnen Rohren häufig eine so genannte Perl-Verdampfung im Durchflusskanal erzeugen, so dass die Brühtemperatur auf 85°C begrenzt ist und nicht höher ansteigt. Dies wird als Nachteil angesehen.

Aus der EP 1 147 730 ist eine Kaffeemaschine bekannt, die zwei Thermostate aufweist. Die Thermostate sind dafür vorgesehen, um Wasser gemäss der gewünschten Anwendung zuzubereiten, d.h. als Aufgussflüssigkeit und als überhitzter Dampf. Diese Druckschrift weist darauf hin, dass nach dem Einleiten des Wassers in den Heizkörper dessen Temperatur absinkt, bevor der Thermostat reagieren kann, so dass die Kaffees von nachfolgenden Tassen unzureichende oder unregelmässige Temperaturen aufweisen würden. Der erste Thermostat regelt den Heizkörper auf eine erste Temperatur von 95°C, die ausreicht, um das Wasser auf die zur Extraktion des Kaffees als erforderlich angesehene Temperatur von knapp unter 100°C zu bringen. Beim in Gang setzen der Wasserpumpe wird dann ein zweiter Thermostat, dessen Soll-Temperatur beispielsweise 115°C ist, ebenfalls in Betrieb gesetzt.

Aus der US 2004/0197444 ist eine Verfahrens-Steuerung bekannt, bei der die Herstellung eines Heiss-Getränkes gemäss einem Code ausgeführt wird, der auf einem Getränke-Behälter aufgedruckt ist. Das Wasser wird durch diesen Behälter hindurchgeleitet, um das Getränk zu erzeugen, wobei die Temperatur, das Volumen, die Flussrate, etc. durch das mit dem Code bestimmte Verfahren festgelegt wird. Ab Absatz [0177] wird darauf hingewiesen, dass Betriebstemperaturen zwischen 83°C und 93°C in Schritten von 2°C ausgewählt werden können.

Aus der EP 0 221 590 ist eine Kaffeemaschine bekannt, bei der versucht wird, eine Wassertemperatur zwischen 90°C und 97°C, jedenfalls sicher nicht unter 80°C, einzustellen. Dabei wird, wenn die Untergrenze der eingestellten Temperatur überschritten worden ist, warmes Wasser insoweit zugefügt, dass die Temperatur oberhalb dieser Grenze verbleibt.

Die EP 0 523 278 betrifft eine Espresso-Maschine, bei der darauf hingewiesen wird, dass die Qualität des erhaltenen Espressos von Drucktemperatur sowie Dauer der Einwirkung dieser Parameter auf das Kaffeepulver Auswirkungen haben. Als Temperaturbereiche werden ein Thermostat im Bereich zwischen 90°C und 95°C und ein Thermostat im Bereich zwischen 130°C und 140°C angegeben.

Aus der EP 0 788 753 ist die Herstellung von Eiskaffee beschrieben, wobei es um eine möglichst ökonomische Kühlung des extrahierten Kaffees durch Zugabe von Wasser geht. Die Extraktion geschieht bei hoher Temperatur und kaltes Wasser wird zum bereits extrahierten Kaffee in einen Mischbehälter gegeben.

### Zusammenfassung der Erfindung

Ausgehend von diesem Stand der Technik basiert die Erfindung auf der Einsicht, dass bei den genannten Espresso-Zubereitungs-Methoden das Getränk zumeist eine leichte bis starke Bitterkeit aufweist, die den Konsumenten nicht unbedingt zusagt. Dies ist einer der Gründe, weswegen viele Leute gar keinen Kaffee trinken, da die Bitterstoffe für sie den Genuss schmälern. Es liegt daher die Aufgabe vor, eine Vorrichtung und ein Verfahren anzugeben, welches diese Bitterstoffe sicher aus dem Getränk fernhält. Diese Aufgabe wird erfindungsgemäss dadurch gelöst, dass die Vorrichtung über eine Wassereinleitung zur Extraktion verfügt, die eine Temperatur von unter 75°C gewährleistet. Die Erfindung basiert auf der überraschenden Einsicht, dass unterhalb der genannten Temperatur die Bitterstoffe der Karamelisierung der Zuckerstoffe des Kaffees nicht lösbar sind. Damit überwiegen im extrahierten Getränke die süssen und leicht säuerlichen Stoffe das Gesamtgeschmacksbild, die bei entsprechenden Versuchen der Anmelderin zudem zu einer sahneartigen Struktur und einem besonders schönen Schaum geführt haben.

Dafür ist ein Temperatur-Sensor vorgesehen, mit dem die Temperatur des in die Brühkammer tretenden Wassers erfassbar ist, und der Temperatur-Sensor ist mit einer Steuereinrichtung verbunden, mit der die besagte Temperatur einstellende Elemente regelbar sind, so dass das in die Brühkammer tretende Wasser eine voreinstellbare Temperatur zwischen 50°C und 75°C aufweist, vorteilhafterweise zwischen 65°C und 75°C und insbesondere zwischen 70°C und 74°C.

Eine vorteilhafte Vorrichtung setzt einen mit Zentrifugalkraft arbeitenden Extraktions-Verfahrensschritt ein. Das Verfahren kann jedoch auch bei herkömmlichen Espresso-Maschinen mit manuell betriebener Zufuhr von Pulver-Kaffee oder mit so genannten Portions- oder Kapsel-Systemen eingesetzt werden. Auch kann es sich bei der das Verfahren einsetzenden Vorrichtung um einen aus der Restauration bekannten Vollautomaten handeln, sofern nur die in den Ansprüchen genannten Merkmale zusätzlich verwirklicht sind.

Obwohl die Vorrichtung zur Zubereitung eines Heissgetränks, insbesondere die Extraktion von Kaffee umfassend, als Kaffeemaschine bezeichnet worden ist, können mit einer solchen Maschine auch andere Heissgetränke, wie beispielsweise Tee, zubereitet werden, bei der eine Extraktion von Aromastoffen einen wesentlichen Einfluss auf die Getränkequalität hat und somit von Konsumenten entsprechende technische Anforderungen an die Vorrichtung gestellt werden.

### Kurze Beschreibung der Zeichnungen

Die Erfindung wird nun anhand von Zeichnungen näher beschrieben, die in schematischer Weise Ausführungsbeispiele der Erfindung zeigen.
Fig. 1 eine schematische Darstellung in Form eines Blockschaltbildes einer Kaffeemaschine gemäss einem ersten Ausführungsbeispiel der Erfindung;
Fig. 2 schematische Darstellung in Form eines Blockschaltbildes einer Kaffeemaschine gemäss einem zweiten Ausführungsbeispiel der Erfindung; und
Fig. 3 schematische Darstellung in Form eines Blockschaltbildes einer Kaffeemaschine gemäss einem dritten Ausführungsbeispiel der Erfindung.

### Ausführliche Beschreibung von Ausführungsbeispielen

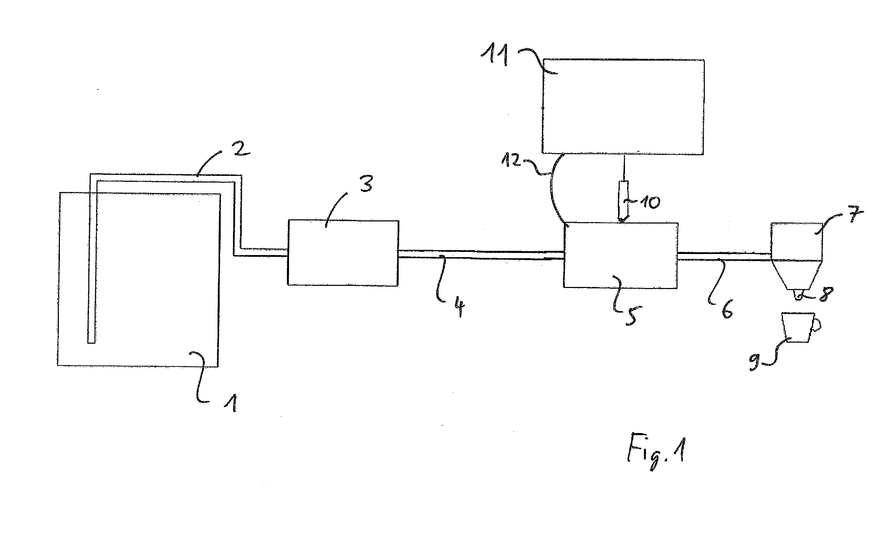

Die Fig. 1 zeigt eine schematische Darstellung mit Betriebseinheiten einer Kaffeemaschine gemäss einem ersten Ausführungsbeispiel der Erfindung. Es handelt sich dabei um eine schematische Darstellung in Form eines Blockschaltbildes, wobei der Fachmann die einzelnen Blöcke mit ihm im Prinzip einzeln bekannten Elementen füllt.

Die Kaffeemaschine verfügt über einen Wasser aufnehmenden Behälter 1, bei dem es sich um einen einsetzbaren oder fest eingebauten Behälter handeln kann. Über eine Rohrleitung 2 wird das Wasser durch die Pumpe 3 aus dem Wassertank entnommen und über eine Rohrleitung 4 in einen Erhitzungsbereich 5 gebracht. Der Erhitzungsbereich 5 verfügt über eine Aufheizeinrichtung und ist über eine Ausflussleitung 6 mit einer Brühkammer 7 verbunden, die einen Auslass 8 zur Abgabe des hergestellten Kaffees, beispielsweise in eine Tasse 9, aufweist. Diese Elemente sind die Grundelemente einer Kaffeemaschine und können im Prinzip entsprechend dem Stand der Technik ausgestaltet sein. Bei dem hier interessierenden Ausführungsbeispiel ist vorteilhafterweise der Bereich der Zuleitung hinter der Pumpe 3, d.h. die Leitungen 4 und 6 sowie die Aufheizeinrichtung 5, nach Füllung mit Wasser unter Druck stehend. Dieser Druck wird dann in die Brühkammer 7 hinüber gebracht.

Der besagte Druck kann insbesondere zwischen 1.5 und 20 bar und insbesondere zwischen 7 und 15 bar sein. Dieser Druck bedeutet, dass die durch einen die Temperatur messenden Sensor 10 and an dem Erhitzungsbereich 5 abgegriffene Temperatur immer demselben Zustand des Wassers entspricht, unabhängig davon, ob eine solche Vorrichtung auf Meereshöhe oder im Gebirge auf mehreren Tausend Metern Höhe betrieben wird, wo auf Grund des verminderten Umgebungsluftdruckes die Siedetemperatur des Wassers sinkt.

Bei dem Erhitzungsbereich 5 kann es sich um einen Durchlauf-Erhitzer handeln oder auch um ein Reservoir, welches für eine oder mehrere Tassen Kaffee ausreichend ist.

Erfindungsgemäss ist der Temperatur-Sensor 10 mit einer elektronischen Steuereinrichtung 11 verbunden, die ansonsten in bekannter Weise die Pumpe 3 an- und ausschaltet sowie die Ventile in Bezug auf die Brühkammer öffnet oder schliesst. Diese Steuerung kann prinzipiell auch von Hand oder elektromechanisch ausgestaltet sein.

Bei dem hier dargestellten Ausführungsbeispiel besteht auch eine Steuerleitung 12 zur Aufheiz-Einrichtung 5, die hier so ausgestaltet ist, dass bei einem Einschalten der Kaffeemaschine zur Füllung der Brühkammer das in der Aufheizeinrichtung 5 bestehende Wasser lediglich auf eine voreingestellte Temperatur zwischen 50°C und 75°C aufheizbar ist. Vorteilhafterweise liegt die Temperatur zwischen 65°C und 75°C und insbesondere zwischen 70°C und 74°C. Damit wird gewährleistet, dass bei Einleiten des so erhitzten Wassers über die Ausgangsleitung 6 in die Brühkammer 7 der Kaffee mit einer Temperatur in den genannten Bereichen erstellt wird. Vorteilhafterweise ist die Brühkammer 7 ebenfalls unter Druck stehend und meistens mechanisch auch zur Überleitung der Wärme-Energie mit der Aufheizeinrichtung 5 durch Wärmebrücken oder direkt verbunden. Damit geschieht der automatische Übergang der Kaffee-Inhaltsstoffe in das einfliessende Wasser in den genannten Temperatur-Bereichen, insbesondere vorteilhafterweise zwischen 70°C und 74°C, so dass gewährleistet ist, dass Bitterstoffe nicht entstehen, die in den Kaffee abgegeben werden können. Nach dem Ablauf der notwendigen Brühzeit kann dann der Kaffee über den Auslass 8 in beispielsweise eine Tasse 9 herausgelassen werden.

Wesentlich ist die Einstellung dieses Temperatur-Bereichs, der aufgrund der Druckbeaufschlagung von Brühkammer und Aufheizeinrichtung 7 bzw. 5 immer unabhängig vom Aussendruck zu einer gleichlaufenden Aromaübertragung des Kaffees führt.

Bei einem vorteilhaften Ausführungsbeispiel besteht innerhalb der elektronischen Schaltung 11 eine Umschalt-Möglichkeit, so dass neben der erfindungsgemässen Zubereitung von einem Heissgetränk die Vorrichtung auch in konventioneller Weise einsetzbar ist. Dabei wird dann der Thermo-Sensor 10 oder ein anderer in der Zeichnung nicht dargestellter Thermo-Sensor eingeschaltet, der einen Schwellenwert von beispielsweise 90°C oder 95°C aufweist, jedenfalls über 85°C, so dass die Aufheiz-Einrichtung auch dazu benutzt werden kann, in traditioneller Weise Kaffee mit der bekannten hohen Temperatur entsprechend dem Stand der Technik herzustellen. Somit hat dann der Konsument die Wahl zwischen zwei diskreten Brühtemperaturen. Diese Wahl kann auch bereichsweise einstellbar sein, also beispielsweise in einem ersten Bereich zwischen 60°C und 75°C und in einem zweiten Bereich zwischen 85°C und 97°C, wobei innerhalb der einzelnen Intervalle die Schritte digital oder analog wählbar sein können.

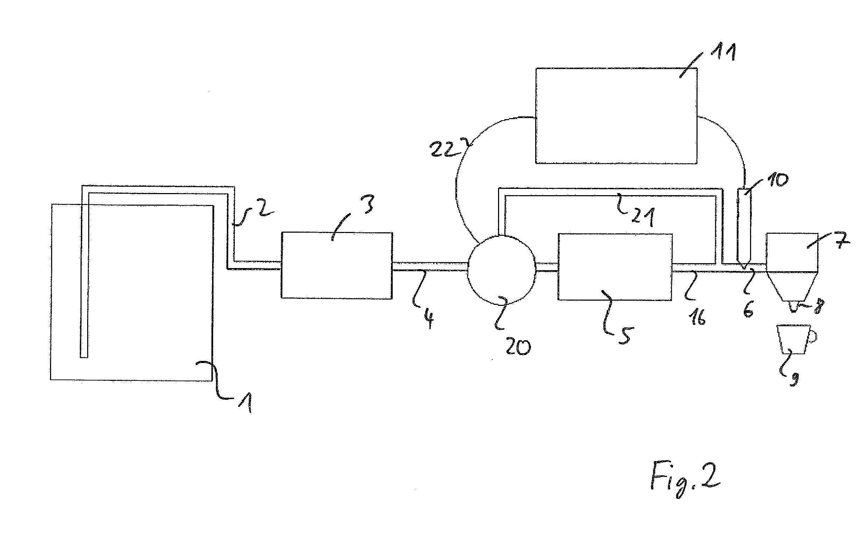

Die Fig. 2 zeigt ein zu Fig. 1 ähnliches Ausführungsbeispiel der Erfindung, wobei gleiche oder ähnliche Merkmale der hier dargestellten Ausführung mit gleichen Bezugszeichen versehen worden sind. Bei der Fig. 2 ist zwischen Pumpe 3 und Aufheizeinrichtung 5 ein 3-Weg Ventil 20 angeordnet, welches über eine Steuerleitung 22 mit der elektronischen Steuereinrichtung 11 verbunden ist. Die Aufheizeinrichtung 5 heizt das einfliessende unter Druck stehende Wasser auf eine vorbestimmte Temperatur, beispielsweise im Bereich zwischen 90°C und 98°C auf, welches dann über die Ausgangs-Leitung 16 abgegeben wird. Zur Erreichung einer Temperatur in der Brühkammer im Bereich von zwischen 50°C und 75°C, ist diese Temperatur in der Ausflussleitung 6 einzustellen, deren Temperatur über den Thermo-Sensor 10 der elektronischen Steuerung 11 mitgeteilt wird. Bei Erreichen eines Intervalls von Schwellenwerten, beispielsweise zwischen 70°C und 74°C oder zwischen 72°C und 73°C steuert die elektronische Steuervorrichtung das 3-Weg Ventil 20 derart, dass direkt aus dem Reservoir 1 entnommenes und durch die Pumpe 3 vorgedrücktes Wasser über eine Nebenflussleitung 21 an der Aufheizvorrichtung 5 vorbeigeführt wird. Dieses im Prinzip kalte Wasser, beispielsweise im Temperaturbereich zwischen 10°C und 20°C wird dann mit dem aus der Ausflussleitung 16 stammenden Wasser vermischt und ergibt in der Ausgangsleitung 6 die vom Thermo-Sensor 10 gewünschte, das heisst einzuregelnde Temperatur, insbesondere um einen vorgegebenen Wert oder in einem entsprechend angegebenen Temperatur-Intervall. Durch eine entsprechende Regelung der Temperatur der Aufheiz-Einrichtung ist durch das 3-Weg Ventil 20 gewährleistet, dass auch bei Füllung der Brühkammer 7 bzw. Entnahme des Wassers aus der Brühkammer 7 der durch die Pumpe 3 aufrecht erhaltene Druck jeweils zur gleichen Temperatur führt oder entsprechend durch das Ventil 20 nachgeregelt wird.

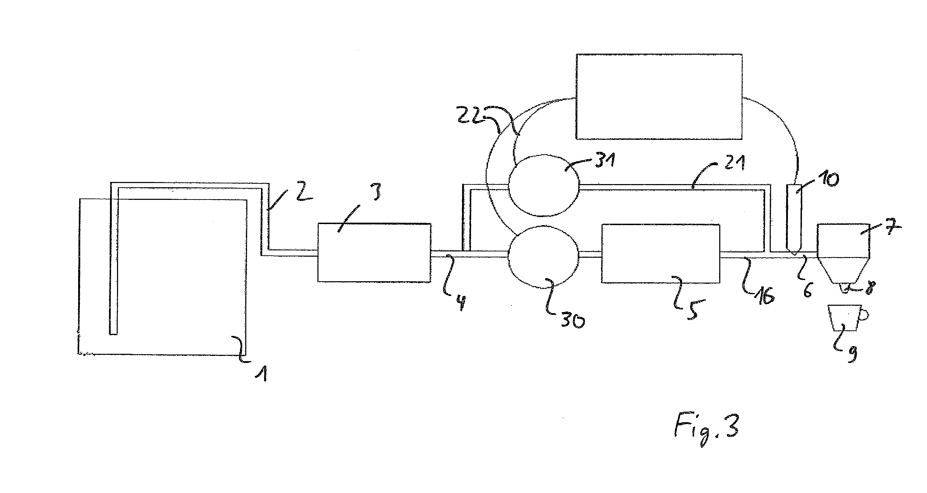

Die Fig. 3 zeigt ein zur Fig. 2 ähnliches Ausführungsbeispiel, bei dem zwei 2-Weg Ventile 30 und 31 vorgesehen sind, eines in der Zuflussleitung 4 vor der Aufheizeinrichtung 5 (2-Weg Ventil 30) und das andere in der Nebenflussleitung 21 (2-Weg Ventil 31). Hier kann dann durch getrennte Öffnung der Ventile 30 und 31 in der gleichen Art und Weise die gewünschte Temperatur zwischen 50 und 75°C, beispielsweise um 74°C, durch entsprechende Wasser-Zuleitung in den Leitungen 21 und 16 in der zusammengeführten Ausgangsleitung 6 eingestellt werden. Wesentlich ist, dass das in die Brühkammer eintretende Wasser 7 die entsprechende angegebene Temperatur hat und eine allfällige Mischung von Wasser vor der Zuleitung in die Brühkammer zu einer homogenen Temperatur geführt wird. Temperatur-Spitzen, insbesondere über 75°C, wären der erreichbaren Kaffee-Qualität abträglich.

Es ist dem Fachmann klar ersichtlich, dass, ausgehend von dem beschriebenen Ausführungsbeispiel, eine Vielzahl von Änderungen und Modifikationen eingeführt werden können, ohne aus dem Rahmen der vorliegenden Erfindung zu gelangen, wie er in den beigefügten Ansprüchen angezeigt wird. So kann die Vorrichtung für den Extraktions-Verfahrensschritt auch eine bekannte Zentrifuge umfassen, die dann begrifflich von der in den Ansprüchen genannten Brühkammer mit eingeschlossen ist.

Anstelle der üblicherweise dazwischen angeordneten Pumpe 3 kann die Kaffeemaschine auch eine Handhebelmaschine sein, bei der der für die Herstellung eines Espresso notwendigen Druckes von beispielsweise 9 bar durch einen Handhebel erzeugbar ist. Dabei kann die Hebelkraft direkt oder beispielsweise durch Spannen einer Feder erzeugt werden. Kaffeemaschinen gemäss der Erfindung können auch sogenannte Dualboiler- oder auch Zweikreismaschinen sein, wobei dann der Wasserkreis das besagte Heisswasser liefert und der zweite Kreis separat und ohne Bezug zur Erfindung für (überhitzten) Dampf vorgesehen sein kann.

Als Thermosensor können einfache Bimetall-Thermostate sein, elektronische Sensoren wie PTC-Elemente oder prinzipiell auch Pressostaten. Letztere machen mehr Sinn bei Ausführungen nach Fig. 2 und 3, bei denen die Brüh-Temperatur durch Zumischung von Kaltwasser eingestellt wird.

### Bezugszeichenliste

- 1: Behälter
- 2: Rohrleitung
- 3: Pumpe
- 4: Rohrleitung
- 5: Erhitzungsbereich
- 6: Ausflussleitung
- 7: Brühkammer
- 8: Auslass
- 9: Tasse
- 10: Temperatur-Sensor
- 11: Steuereinrichtung
- 12: Steuerleitung
- 16: Ausgangsleitung
- 20: Dreiwegventil
- 21: Nebenflussleitung
- 22: Steuerleitung
- 30: Zweiwegventil
- 31: Zweiwegventil

## Patentansprüche

1. Kaffeemaschine mit einem Wasser aufnehmenden Behälter (1), mit einer Aufheizeinrichtung (5), wobei diese mit dem Behälter (1) zum Transport von aufzuheizendem Wasser verbunden (2) ist, insbesondere durch eine dazwischen angeordnete Pumpe (3), und mit einer Brühkammer (7), die mit der Aufheizeinrichtung (5) zum Transport des aufgeheizten Wassers verbunden ist und über einen Auslass (8) zur Abgabe des hergestellten Kaffees verfügt, **dadurch gekennzeichnet, dass** ein Temperatur-Sensor (10) vorgesehen ist, mit dem die Temperatur des in die Brühkammer (7) tretende Wasser erfassbar ist, und dass der Temperatur-Sensor (10) mit einer Steuereinrichtung (11), insbesondere einer elektronischen Steuereinrichtung (11), verbunden ist, mit der die besagte Temperatur einstellende Elemente (5; 5, 20; 5, 30, 31) regelbar sind, so dass das in die Brühkammer (7) tretende Wasser eine voreinstellbare Temperatur zwischen 50°C und 75°C aufweist, vorteilhafterweise zwischen 65°C und 75°C und insbesondere zwischen 70°C und 74°C.

2. Kaffeemaschine nach Anspruch 1, **dadurch gekennzeichnet, dass** mit Hilfe der Pumpe (3) beim Betrieb der Kaffeemaschine das in der Aufheizeinrichtung (5) und in der Brühkammer (7) befindliche Wasser unter Druck, insbesondere zwischen 1.5 und 20 bar und insbesondere zwischen 7 und 15 bar, setzbar ist.

3. Kaffeemaschine nach Anspruch 1 oder 2, **dadurch gekennzeichnet, dass** die Steuereinrichtung (11) eine Umschaltmöglichkeit aufweist, mit der wahlweise eine besagte Temperatur in dem voreinstellbaren Bereich zwischen 50°C und 75°C oder eine besagte Temperatur über 85°C, insbesondere zwischen 90°C und 95°C, einstellbar ist.

4. Kaffeemaschine nach einem der Ansprüche 1 bis 3, **dadurch gekennzeichnet, dass** die Aufheizeinrichtung (5) ein Durchlauferhitzer oder Boiler ist, der für eine Abgabetemperatur des in die Brühkammer (7) tretenden Wassers auf die besagte Temperatur regelbar ist.

5. Kaffeemaschine nach einem der Ansprüche 1 bis 3, **dadurch gekennzeichnet, dass** vor der Aufheizeinrichtung (5) ein 3-Weg-Ventil (20) angeordnet ist, welches mit der Steuereinrichtung (11) verbunden ist, wobei eine Nebenflussleitung (21) vorgesehen ist, die mit dem 3-Weg-Ventil (20) verbunden ist und sich vor der Brühkammer (7) mit der aus der Aufheizeinrichtung (5) führenden Leitung (16) vereinigt (6), dass mit der Aufheizeinrichtung (5) das einfliessende Wasser auf eine vorbestimmte Temperatur im Bereich zwischen 75°C und 98°C aufheizbar ist, dass zur Erreichung der besagten Temperatur in der Brühkammer das 3-Weg-Ventil (20) durch die Steuervorrichtung (11) derart steuerbar ist, dass direkt aus dem Behälter (1) entnommenes im wesentlichen nicht aufgeheiztes Wasser über die Nebenflussleitung (21) an der Aufheizvorrichtung (5) in einer Menge vorbeigeführt wird, dass sich beim vermischten Wasser die vergebene Temperatur einstellt.

6. Kaffeemaschine nach einem der Ansprüche 1 bis 3, **dadurch gekennzeichnet, dass** vor der Aufheizeinrichtung (5) zwei 2-Weg-Ventile (30, 31) angeordnet sind, welche mit der Steuereinrichtung (11) verbunden sind, wobei eine Nebenflussleitung (21) vorgesehen ist, die mit dem einen 2-Weg-Ventil (31) verbunden ist und sich vor der Brühkammer (7) mit der aus der Aufheizeinrichtung (5) führenden Leitung (16) vereinigt (6), dass mit dem zweiten 2-Weg-Ventil (31) die Menge der in die Aufheizeinrichtung (5) einfliessende Wasser regelbar ist, dass die Mengen des durch die Nebenflussleitung (11) fliessenden Wassers und des in die Aufheizeinrichtung (5) einfliessenden Wassers zur Erreichung der besagten Temperatur in der Brühkammer so eingestellt werden, dass sich beim vermischten Wasser die vorgegebene Temperatur einstellt.
